(19) Europäisches Patentamt
European Patent Office
Office européen des brevets

(11) Publication number: **0 126 961**
**A2**

(12) # EUROPEAN PATENT APPLICATION

(21) Application number: 84104512.3

(22) Date of filing: 19.04.84

(51) Int. Cl.³: C 01 B 3/02
C 01 C 1/04, C 10 J 3/00

(30) Priority: 31.05.83 US 499628

(43) Date of publication of application:
05.12.84 Bulletin 84/49

(84) Designated Contracting States:
BE DE FR GB IT

(71) Applicant: WESTINGHOUSE ELECTRIC CORPORATION
Westinghouse Building Gateway Center
Pittsburgh Pennsylvania 15222(US)

(72) Inventor: Smith, Kevin Joseph
314 Carroll Way
Monongahela Pennsylvania(US)

(72) Inventor: Lewandowski, David Allen
526 Todd Road
Belle Vernon Pennsylvania(US)

(72) Inventor: Haldipur, Gaurang Bhalchandar
1109 Acorn Drive
Greensburg Pennsylvania(US)

(74) Representative: Fleuchaus, Leo, Dipl.-Ing. et al,
Fleuchaus & Wehser Melchiorstrasse 42
D-8000 München 71(DE)

(54) **Gasification process for ammonia production.**

(57) In a gasification process where coal or coke is reacted with oxygen and steam to produce a synthetic gas for making ammonia, the components for the syngas are so selected that the syngas can be used in the synthesis of ammonia without the addition of nitrogen: Instead of using oxygen to make the syngas, a mixture of oxygen and air is used as the source of oxygen, the mixutre being in a ratio such that the syngas contains nitrogen and hydrogen in a molar ratio of about 1 to 3.

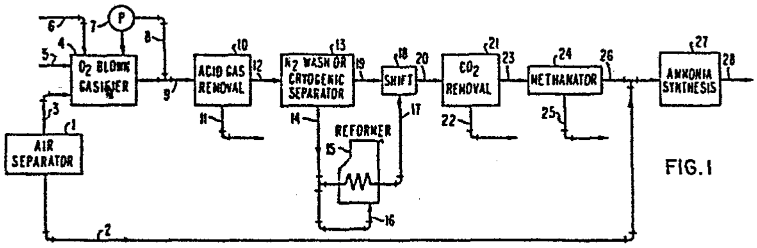


FIG. 1

EP 0 126 961 A2

Croydon Printing Company Ltd.

# GASIFICATION PROCESS FOR AMMONIA PRODUCTION

Gasification processes have been used to convert coal or coke into a synthetic gas (syngas) for use in making ammonia. In these processes, the coal or coke is reacted with oxygen and steam to produce the syngas. Since the syngas does not have the 1 to 3 mole ratio of nitrogen to hydrogen which is necessary to produce ammonia, nitrogen must be added to the syngas prior to the synthesis of the ammonia. While this process is technically feasible, it is too costly to be widely used commercially.

Several processes for producing synthetic gas for the manufacture of ammonia are known:

U.S. Patent No. 4,238,468 discloses the synthesis of ammonia by a process wherein air is used in the reforming, shift converting, and ammonia synthesis step. However, normally gaseous hydrocarbon or vaporized naptha is used as a feed stock rather than coal.

U.S. Patent No. 4,315,900 teaches the reforming of a gaseous hydrocarbon feed in the presence of both air and steam with subsequent shift, carbon dioxide removal, and ammonia synthesis. The air is introduced at the secondary reforming step to provide oxygen and nitrogen for use in the reforming and in subsequent processes.

U.S. Patent No. 4,197,281 discloses a process for the production of ammonia synthesis gas from coal or similar materials. Instead of air, however, high pressure nitrogen is used as a feed in carrier gas for the oxygen-

blow gasifier. The use of nitrogen provides the appropriate ratio of nitrogen to hydrogen downstream at the ammonia synthesis loop. It is, however, expensive.

It is the object of the present invention to provide a coal gasification process for making synthetic gas for use in ammonia production which process does not require the use of nitrogen.

With this object in view the present invention resides in a gasification process wherein coal or coke is reacted with oxygen and steam to produce a synthesis gas for making ammonia, characterized in that a mixture of oxygen and air is used as a source of said oxygen, said mixture being in a ratio such that said synthesis gas contains nitrogen and hydrogen in a molar ratio of about 1 to 3.

It was discovered that if a mixture of oxygen and air is substituted for oxygen in a gasification process for producing ammonia, it is not necessary to add nitrogen to the resulting syngas in order to obtain the 1:3 molar proportion of nitrogen to hydrogen which is necessary for producing ammonia. By altering the process in this manner, it becomes possible to use less oxygen and much less steam than did the conventional process for producing a syngas for ammonia synthesis. Since both oxygen and steam are important cost components in the process, the improvement of this invention significantly lowers the cost of the process. In addition, when a fluidized bed is used, it is not necessary to recycle the syngas to fluidize the coal or coke in the fluidized bed. This eliminates the need for a compressor to recycle the syngas gas, although a compressor must be used to compress the air. However, air compressors are considerably less expensive as the syngas contains fine particles which are very damaging to gas compressors.

The invention will become more readily apparent from the following description of a preferred embodiment thereof shown, by way of example only, in the accompanying drawings, wherein:

Figure 1 is a block diagram which illustrates a conventional gasification process for producing a syngas for ammonia synthesis.

Figure 2 is a block diagram which illustrates a certain presently preferred embodiment of the gasification process of this invention.

In Figure 1, air separator 1 separates air into nitrogen in line 2 and oxygen in line 3. The oxygen in line 3 goes to gasifier 4 which is also fed with coal from line 5 and steam from line 6. The gasifier burns the coal and reacts with water to produce carbon dioxide, carbon monoxide, hydrogen, and methane. The compressor 7 recycles some of the process gas in line 8 to provide fluidization for the gasifier. The remaining gas proceeds through line 9 to acid gas removal unit 10 which removes acid gases which interfere with ammonia synthesis, such as hydrogen sulfide and carbon dioxide, in line 11. The gas proceeds through line 12 to nitrogen wash 13 where methane is separated and sent through line 14 to reformer 15. In the reformer some of the methane is combusted to react the remaining methane with water, producing hydrogen and carbon monoxide according to the equation

$$CH_4 + H_2O \rightarrow 3H_2 + CO$$

The hydrogen and carbon monoxide pass through line 17 to shift 18 where they are mixed with the remaining gases in line 19. In the shift unit, carbon monoxide and water are reacted to produce carbon dioxide and hydrogen according to the equation:

$$CO + H_2O \rightarrow CO_2 + H_2$$

The shift unit can include catalysts for a low or high temperature conversion. The gas is passed through line 20 to carbon dioxide removal unit 21, where carbon dioxide is removed through line 22. The gas is passed through line

23 to methanator 24 where methane is removed through line 25. (The carbon dioxide and methane are removed as they poison the ammonia synthesis.) The nitrogen from line 2 is then combined with the remaining gases in line 26, which are sent to the ammonia synthesis unit 27 where ammonia is synthesized in a well-known process according to the equation:

$$N_2 + 3H_2 \rightarrow 2NH_3$$

The ammonia then leaves through line 28.

In Figure 2, a smaller air separator 30 provides oxygen in line 31 for gasifier 32. Air compressor 33 pumps air through line 34 to the gasifier, and steam and coal enter the gasifier through lines 35 and 36, respectively. As in Figure 1, the gasifier reacts carbon, oxygen and water to produce carbon dioxide, carbon monoxide, hydrogen and methane which proceed through line 37 to acid gas removal unit 38 where acid gases such as hydrogen sulfide and carbon dioxide are removed in line 39. The remaining gas goes through line 40 to nitrogen wash 41 which removes the methane in line 42. As in Figure 1, part of the methane is burned in line 43 in reformer 44, while the remainder reacts with water to produce hydrogen and carbon monoxide which are sent through line 45 to shift 46 where they are mixed with the remaining gases from line 47. In shift 46, the carbon monoxide and water are reacted to form carbon dioxide and hydrogen. These gases proceed through line 48 to carbon dioxide removal unit 49 which removes the carbon dioxide in line 50. The remaining gas is passed through line 51 to methanator 52 which removes the methane in line 53. The gases then proceed through line 54 to ammonia synthesis unit 55 where ammonia is synthesized and passes through line 56.

While coal is preferred for use in the gasifier as it is a more common material, coke may also be used. However, if coke is used, adjustments must be made in the

gas ratios to take into account the different burning qualities of coke. The coal or coke should be sized for use in the gasifier. That is, if a fluidized bed is used, the coal or coke should have a particle size of less than about ¼ inch.

The gasifier may be operative as a fluidized bed, a fixed bed, an entrained bed or other type. It is preferably operated as a fluidized bed because a fluidized bed has a lower operating temperature than an entrained bed and less tar formation than a fixed bed.

The steam must be superheated, but the temperature of the steam depends on the pressure used in the gasifier. At a typical pressure of about 500 psi, the steam should have a temperature of greater than about 430°F.

The acid gas removal may be accomplished by running the gas through a solvent. In the benfield process carbon dioxide and sulfur compounds are removed at ambient temperatures using "heat" carbonates, such as potassium carbonate. In the selexol process a "selexol" solvent is used to remove carbon dioxide and sulfur compounds by physical absorption. In the Rectisol process liquid methanol is used at low (almost cyrogenic) temperatures to remove carbon dioxide and sulfur and produce a chemical grade carbon dioxide as a byproduct.

The nitrogen wash separates the methane from the remaining gas. This can be accomplished by washing the gas in liquid nitrogen. Separation of the methane can also be accomplished cryogenically by cooling the gases to a liquid and letting the more volatile gases evaporate.

The carbon dioxide removal can be accomplished by a process similar to the processes described for removing the acid gas.

In the methanator residual carbon monoxide and carbon dioxide are converted to methane, which is inert in the ammonia reactor. This can be accomplished by known processes.

While the process of this invention involves the use of much less oxygen, much less steam, and eliminates the need to recycle gas, some additional coal is required to heat up the nitrogen which passes through the process. The conventional process requires more steam than is needed for the gasifier reaction in order to dilute the oxygen. This prevents a high temperature zone from arising in the gasifier which tended to produce a sinter material that obstructs withdrawal of ash. Since nitrogen in the process of this invention also dilutes the oxygen, less steam is required. The following table is a material balance of the conventional process as illustrated in Figure 1. The table gives the moles per hour (mph) of the different gases in different lines in Figure 1 which are required to produce 1,000 tons per day of ammonia.

| Stream No. | 3 | 6 | 8 | 9 | 14 | 16 | 17 | 19 | 20 | 28 | 2 |
|---|---|---|---|---|---|---|---|---|---|---|---|
| Description | Oxygen | Steam | Recycle Gas | Raw Gas | Methane | Firebox Feed | Reformed Syngas | $CH_4$ Free Syngas | Shifted Gas | Product Ammonia | Nitrogen Stream |
| CO, mph | -- | -- | 693.3 | 3244.9 | -- | -- | 455.3 | 3244.9 | -- | -- | -- |
| $CO_2$, mph | -- | -- | 194.3 | 928.0 | -- | -- | -- | -- | 3700.2 | -- | -- |
| $CH_4$, mph | -- | -- | 124.4 | 582.3 | 582.3 | 126.9 | -- | -- | -- | -- | -- |
| $H_2$, mph | -- | -- | 492.7 | 2307.9 | -- | -- | 1366.0 | 2307.9 | 7374.1 | -- | -- |
| $N_2$, mph | -- | -- | -- | -- | -- | -- | -- | -- | -- | -- | 2458.0 |
| $NH_3$, mph | -- | -- | -- | -- | -- | -- | -- | -- | -- | 4916.0 | -- |
| $H_2S$, mph | -- | -- | 19.8 | 97.4 | -- | -- | -- | -- | -- | -- | -- |
| $H_2O$, mph | -- | 2495.0 | -- | 1408.8 | -- | -- | -- | -- | -- | -- | -- |
| $O_2$, mph | 1633.1 | -- | -- | -- | -- | -- | -- | -- | -- | -- | -- |
| Total mph | 1633.1 | 2495.0 | 1524.5 | 8569.3 | 582.3 | 126.9 | 1821.3 | 5552.8 | 11074.3 | 4916.0 | 2458.0 |

The following table is a similar material balance for the gasifier of this invention and gives the gases in the streams identified in Figure 2 which are necessary to produce 1,000 tons per day of ammonia.

| Stream No. Description | 31 Oxygen | 35 Steam | 34 Air | 37 Raw Gas | 42 Methane | 43 Firebox Feed | 45 Reformed Syngas | 47 $CH_4$ Free Syngas | 48 Shifted Gas | 28 Product Ammonia |
|---|---|---|---|---|---|---|---|---|---|---|
| CO, mph | -- | -- | -- | 3870.6 | -- | -- | 330.1 | 3870.6 | -- | -- |
| $CO_2$, mph | -- | -- | -- | 544.5 | -- | -- | -- | -- | 4200.7 | -- |
| $CH_4$, mph | -- | -- | -- | 421.9 | 421.9 | 92.0 | -- | -- | -- | -- |
| $H_2$, mph | -- | -- | -- | 2242.5 | -- | -- | 990.3 | 2242.5 | 7433.5 | 80.5 |
| $N_2$, mph | -- | -- | 2415.4 | 2451.0 | -- | -- | -- | 2451.0 | 2451.0 | -- |
| $NH_3$, mph | -- | -- | -- | 19.2 | -- | -- | -- | -- | -- | 4902.0 |
| $H_2S$, mph | -- | -- | -- | 97.9 | -- | -- | -- | -- | -- | -- |
| $H_2O$, mph | -- | 825.7 | -- | 526.2 | -- | -- | -- | -- | -- | -- |
| $O_2$, mph | 1106.8 | -- | 642.1 | -- | -- | -- | -- | -- | -- | -- |
| Total mph | 1106.8 | 825.7 | 3057.5 | 10204.9 | 421.9 | 92.0 | 1320.4 | 8564.1 | 14085.2 | 4982.5 |

The incremental benefits and penalties of the process of this invention over the conventional process were analyzed. The following table gives the percent benefit (+) or percent penalty (-) from using the process of this invention instead of the conventional process.

| | Incremental Benefit $\frac{(1 - \text{This Invention Requirement}) \times 100}{\text{Conventional Requirement}}$ | |
|---|---|---|
| **Gasifier** | | |
| Coal Feed | -9.8 | Small penalty on cost of lockhoppers. |
| Oxygen Feed | 32.2 | Major benefit. |
| Steam Feed | 66.9 | Major benefit. |
| Recycle Gas | 100.0 | Major benefit. |
| Gross Gas Throughput (Freeboard Velocity) | -1.4 | Negligible; gasifier I.D. remains unchanged. |
| **Acid Gas Removal** | | |
| Total Gas Throughput | -35.2 | AGR costs more sensitive to CO removal than to gas throughput. Hence overall benefit. |
| $CO_2$ Removal Load | 41.3 | |
| **Methane Removal** | | |
| Total Gas Throughput | -46.5 | Cryogenic costs would probably be same in both cases. Load offsets throughput. |
| $CH_4$ Removal Load | 27.6 | |
| **Reformer** | | |
| $CH_4$ Capacity | 27.6 | Benefit. |
| **Shift** | | |
| Total Gas Throughput | -34.0 | Minor penalty. |
| CO Conversion Load | -13.5 | Minor penalty. |
| **Compressed Gas Requirement** | | |
| Air to Gasifier (This Invention) | 3057.5 moles/hr | Minor penalty since compression requirements are similar. |
| Nitrogen to Synthesis (Conventional) | 2458.0 moles/hr | |

The above analysis shows that there are major benefits to the process of this invention in the use of much less oxygen and steam and the elimination of the recycle gas, and that the penalties are relatively minor, leaving an overall net benefit for the process of this invention.

IDENTIFICATION OF REFERENCE NUMERALS USED IN THE DRAWINGS

| LEGEND | REF. NO. | FIGURE |
|---|---|---|
| AIR SEPARATOR | 1 | 1 |
| $O_2$ BLOWN GASIFIER | 4 | 1 |
| P | 7 | 1 |
| ACID GAS REMOVAL | 10 | 1 |
| $N_2$ WASH OR CRYOGENIC SEPARATOR | 13 | 1 |
| REFORMER | 15 | 1 |
| SHIFT | 18 | 1 |
| $CO_2$ REMOVAL | 21 | 1 |
| METHANATOR | 24 | 1 |
| AMMONIA SYNTHESIS | 27 | 1 |
| AIR SEPARATOR | 30 | 2 |
| $O_2$ BLOWN GASIFIER | 32 | 2 |
| P | 33 | 2 |
| ACID GAS REMOVAL | 38 | 2 |
| $N_2$ WASH OR CRYOGENIC SEPARATOR | 41 | 2 |
| REFORMER | 44 | 2 |
| SHIFT | 46 | 2 |
| $CO_2$ REMOVAL | 49 | 2 |
| METHANATOR | 52 | 2 |
| AMMONIA SYNTHESIS | 55 | 2 |

CLAIMS:

1. A gasification process wherein coal or coke is reacted with oxygen and steam to produce a synthesis gas for making ammonia, characterized in that a mixture of oxygen and air is used as a source of said oxygen, said mixture being in a ratio such that said synthesis gas contains nitrogen and hydrogen in a molar ratio of about 1 to 3.

2. A process according to Claim 1, characterized in that the molar ratio of said air to said oxygen in said mixture is 2.5 to 3.0 air to 1 oxygen.

3. A process according to Claim 1 or 2, characterized in that the synthesis gas is conducted over a reformer which causes the methane therein to react with water to produce hydrogen and carbon dioxide.

4. A process according to Claim 1, 2 or 3, characterized in that the synthesis gas is generated in a fluidized bed coal gasification reactor.

5. A process according to any of Claims 1 to 4, characterized in that coal is used in said gasification process.

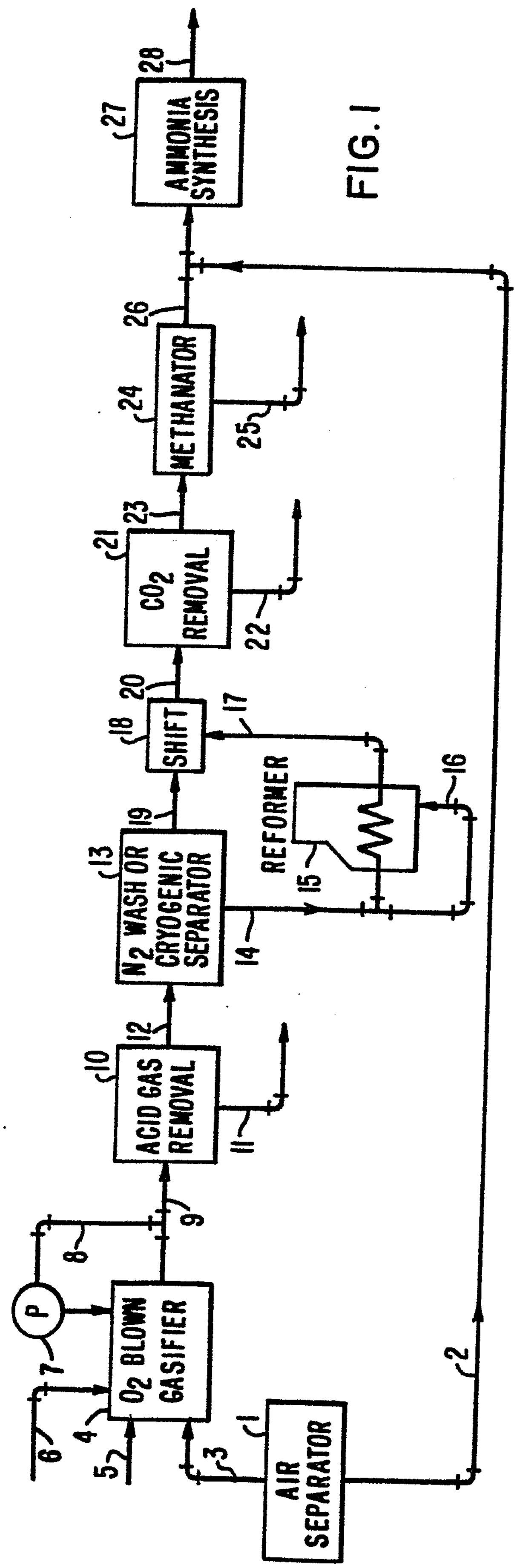
AIR SEPARATOR
$O_2$ BLOWN GASIFIER
P
ACID GAS REMOVAL
$N_2$ WASH OR CRYOGENIC SEPARATOR
REFORMER
SHIFT
$CO_2$ REMOVAL
METHANATOR
AMMONIA SYNTHESIS
1
2
3
4
5
6
7
8
9
10
11
12
13
14
15
16
17
18
19
20
21
22
23
24
25
26
27
28

FIG. 1

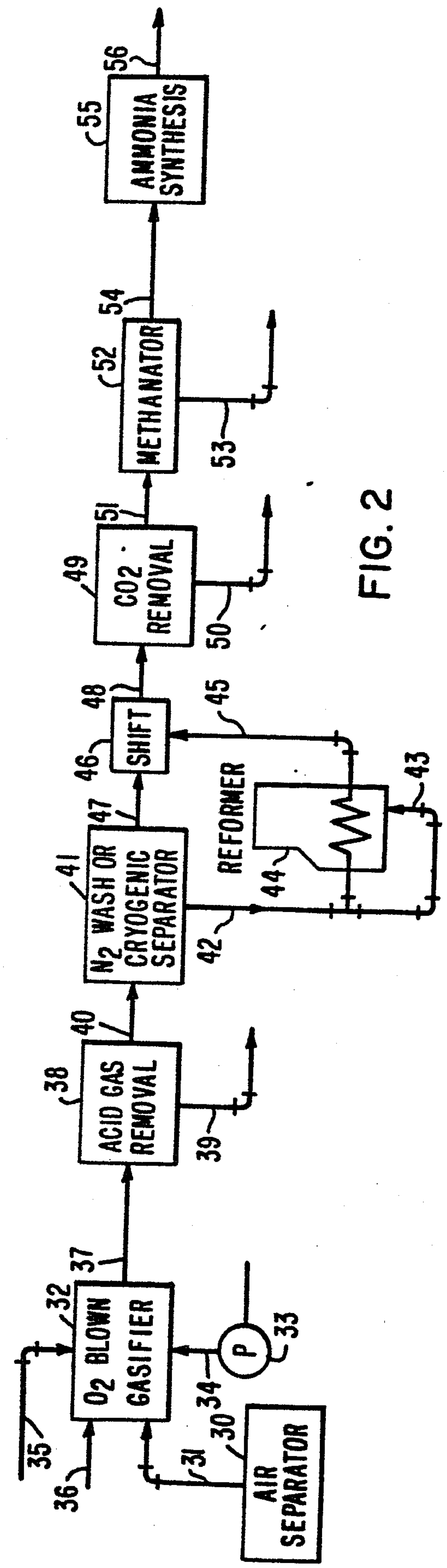
AIR SEPARATOR
$O_2$ BLOWN GASIFIER
P
ACID GAS REMOVAL
$N_2$ WASH OR CRYOGENIC SEPARATOR
REFORMER
SHIFT
$CO_2$ REMOVAL
METHANATOR
AMMONIA SYNTHESIS
30
31
32
33
34
35
36
37
38
39
40
41
42
43
44
45
46
47
48
49
50
51
52
53
54
55
56

FIG. 2